# EUROPEAN PATENT SPECIFICATION

(11) **EP 2 332 276 B1**
(45) Date of publication and mention of the grant of the patent: **25.01.2012**
(21) Application number: 08803641.3
(22) Date of filing: 04.09.2008
(51) Int. Cl.: H04J 14/00

(54) **PASSIVE OPTICAL NETWORKS**
PASSIVE OPTISCHE NETZWERKE
RÉSEAUX OPTIQUES PASSIFS

(43) Date of publication of application: 15.06.2011
(73) Proprietor: Telefonaktiebolaget L M Ericsson (PUBL), 16483 Stockholm (SE)
(72) Inventor: PRESI, Marco, I-56100 Pisa (IT); CONTESTABILE, Giampiero, I-04019 Terracina (LT) (IT); CIARAMELLA, Ernesto, I-00185 Roma (IT); PROIETTII, Roberto, I-56017 San Giuliano Terme (PI) (IT)
(74) Representative: Parkinson, Neil Scott
(86) International application number: PCT/EP2008/061671
(87) International publication number: WO 2010/025767

(56) References cited:
- WO-A-2007/108592
- US-A1- 2008 187 314
- CHOW C W ET AL: "Signal Remodulation with High Extinction Ratio 10-Gb/s DPSK signal for DWDM-PONs" OPTICAL FIBER COMMUNICATION/NATIONAL FIBER OPTIC ENGINEERS CONFERENCE, 2008. OFC/NFOEC 2008. CONFERENCE ON, IEEE, PISCATAWAY, NJ, USA, 24 February 2008 (2008-02-24), pages 1-3, XP031257124 ISBN: 978-1-55752-856-8
- HWAN S CHUNG ET AL: "Effects of inverse-RZ and Manchester code on a wavelength re-used WDM-PON" LASERS&ELECTRO-OPTICS SOCIETY, IEEE, IEEE, PI, 1 October 2006 (2006-10-01), pages 298-299, XP031004098 ISBN: 978-0-7803-9556-5
- HWAN SEOK CHUNG ET AL: "Performance comparison between Manchester and inverse-RZ coding in a wavelength re-modulated WDM-PON" OPTICAL FIBER COMMUNICATION/NATIONAL FIBER OPTIC ENGINEERS CONFERENCE, 2008. OFC/NFOEC 2008. CONFERENCE ON, IEEE, PISCATAWAY, NJ, USA, 24 February 2008 (2008-02-24), pages 1-3, XP031256719 ISBN: 978-1-55752-856-8

## Description

### Technical field

The invention relates to a passive optical network (PON) system, an optical network unit, and a passive optical network line-coding method.

### Background

The majority of telecommunications network operators are currently looking for ways in which to deploy Passive Optical Networks (PON) in environments for which there is a need to bypass the central office in favour of so called "long reach" PONs. In this vision, the Optical Network Units (ONUs) are directly connected to the Optical Line Terminal (OLT) by optical links which might be up to 100 km long. Currently, this goal is achieved by means of in-line amplifiers, also known as extenders, provided within the PON. Although associated with an increase of operational expenses, this approach is being adopted by major telecommunications operators to extend the reach of Gigabit-PON (G-PON) systems which are based on Time Domain Multiple Access (TDMA), as reported in R. Davey, "Next Generation Extended Reach PON," OFC/NFOEC 2008, Paper OThL1, Feb. 2008.

It is recognized that the implementation of wavelength division multiplexed PON (WDM-PON), in which each ONU is assigned a single wavelength, will allow more efficient utilization of fiber bandwidth and will simplify the network management as all the connections are point-to-point. A "Bidirectional WDM-PON Based on Gain-Saturated Reflective Semiconductor Optical Amplifiers" has been reported by W. Lee, M. Park, S. Cho, J. Lee, C. Kim, G. Jeong, and B. Kim in Photonics Technology Letters, IEEE,vol. 17, no. 11, pp. 2460-2462, 2005. In order to provide a full re-modulation of downstream traffic, the R-SOA must be operated within the saturation regime, which presents power budget issues. To mitigate this problem, several solutions have been suggested.

A first proposes the use of reduced modulation-index downstream signals (N. Calabretta, M. Presi, R. Proietti, G. Contestabile, and E. Ciaramella, "A Bidirectional WDM/TDM-PON Using DPSK Downstream Signals and a Narrowband AWG," Photonics Technology Letters, IEEE, vol. 19, no. 16, pp. 1227-1229, 2007), but this introduces, limitations on the downstream sensitivity, and increases power penalty on the upstream signal due to the Rayleigh scattering induced by the downstream channel. Another proposed solution is to employ half-duplex transmissions, in which the R-SOAs are fed with downstream CW light in the upstream transmission slots (C. Arellano, C. Langer, and J. Prat, "Optical Network Units based on Semiconductor Optical Amplifiers in Single-Wavelength Single-Fiber Access Networks," Breitbandversorgung in Deutschlandwie schaffen wir den Anschluss, 2005). "WDM-PON Architectures With a Single Shared Interferometric Filter for Carrier-Reuse Upstream Transmission," has been proposed by X. Cheng, Y. Wang, T. Cheng, and C. Lu, in Journal of Lightwave technology, vol. 25,no. 12, p. 3669, 2007. This technique relies on the use of narrow filters at the remote optical node, and although an optical filter is a passive element, it nevertheless introduces a dependence on the channel wavelengths which should be avoided for practical implementations. Providing broadband seeding sources for the R-SOA from the OLT (separate from the downstream data signal) has been proposed in P. Healey, P. Townsend, C. Ford, L. Johnston, P. Townley, I. Lealman, L. Rivers, S. Perrin, and R. Moore, "Spectral slicing WDM-PON using wavelength-seeded reflective SOAs," Electronics Letters, vol. 37, no. 19, pp. 1181-1182, 2001. However, this approach requires additional filtering at the ONU. Self-seeding of the R-SOA has also been proposed, in E. Wong, K. Lee, and T. Anderson, "Directly-Modulated Self-Seeding Reflective SOAs as Colorless Transmitters for WDM Passive Optical Networks," J. Lightwave Technol. 25, 67-74 (2007). Self seeding initially appeared to be a quite promising technique, however, its practical implementation is severely limited by the power losses experienced at the remote optical node. In practice, it is not possible to realize this scheme in a real environment.

Other approaches, based on the use of optical line coding, have also been proposed, including Inverse RZ (IRZ) for the downstream signal and NRZ coding for the upstream signal (N. Deng, C. Chan, and L. Chen, "A centralized-light-source WDM access network utilizing inverse-RZ downstream signal with upstream data remodulation," Optical Fiber Technology, vol. 13, no. 1, pp. 18-21, 2007) and Manchester coding for the downstream signal and NRZ coding for the upstream signal (H. Chung, B. Kim, H. Park, S. Chang, M. Chu, and K. Kim, "Effects of inverse-RZ and Manchester code on a wavelength re-used WDM-PON, "Lasers & Electro-Optics Society, IEEE, pp. 298-299, 2006). By carrying non-zero energy in each bit (both "mark" and "space") the use of such coding schemes eases the upstream remodulation. However, this technique severely limits the upstream remodulation bandwidth.

### Summary

It is desirable to obviate at least one or more of the above disadvantages and provide an improved passive optical network system, optical network unit and passive optical network line-coding method.

According to a first aspect of the invention there is provided a passive optical network system comprising an optical line terminal comprising: a downlink optical transmitter configured to generate an inverse-return-to-zero line coded downstream data signal, and an uplink optical receiver configured to receive an upstream data signal. An optical network unit comprising a downlink optical receiver is configured to receive a first portion of the downstream data signal. An uplink optical remodulator is configured to receive a second portion of the downstream data signal and remodulate it to generate a return-to-zero line coded upstream data signal. An optical link coupled between the optical line terminal and the optical network unit is configured to transmit downstream and upstream data signals therebetween.

The inverse-return-to-zero/return-to-zero line coding pair is transparent to the architecture of the passive optical network system, thus providing a high degree of flexibility in design and deployment of next generation WDM-PONs.

The inverse-return-to-zero line coded downstream data signal preferably comprises dark pulses having a duty cycle of approximately fifty percent. The passive optical network system is therefore able to achieve symmetrical downstream and upstream data bandwidths.

The uplink optical remodulator preferably comprises an electro-optical modulator configured to be driven by a return-to-zero encoded electronic data signal. The uplink optical remodulator is preferably configured to both remodulate and amplify said second portion of the downstream data signal to generate a return-to-zero line coded upstream data signal. The uplink optical remodulator preferably comprises a reflective semiconductor optical amplifier configured to be driven by a return-to-zero encoded electronic data signal.

The reflective semiconductor optical amplifier is preferably operable on receipt of a dark pulse having a pulse leading edge and a pulse tail to suppress the dark pulse tail to form a logical zero for the upstream data signal or to amplify the dark pulse tail to form a logical one, and is operable on receipt of a light pulse to suppress one-half of the pulse to form a logical one or to suppress the whole pulse to form a logical zero.

The reflective semiconductor optical amplifier therefore only remodulates continuous wave (CW) light signals.

The reflective semiconductor optical amplifier is preferably configured to operate outside of its saturation regime for input powers at the optical power level of the second portion of the downstream data signal. The second portion of the downstream data signal preferably has an optical power of not greater than P = G-P(max), where P is in dBm, G is the gain of the reflective semiconductor optical amplifier in dB and P(max) is the maximum optical output power of the reflective semiconductor optical amplifier in dBm.

Operation of the reflective semi-conductor optical amplifier outside of its saturation regime relaxes the power budget constraints on the passive optical network system.

The optical network unit preferably further comprises signal synchronisation apparatus configured to interleave the return-to-zero line coded upstream data signal by one-half bit with respect to the incoming inverse-return-to-zero line coded downstream data signal. The signal synchronisation apparatus preferably comprises an optical delay line provided between the optical link and the uplink optical remodulator.

This ensures that CW light is available at the reflective semi-conductor optical amplifier for remodulation.

Preferably, the passive optical network system comprises a plurality of optical network units, the optical link being coupled between the optical line terminal and each of the optical network units.

The optical network units may be configured to receive downstream data signals of a plurality of different wavelengths, the optical line terminal comprises a corresponding plurality of downlink optical transmitters configured to generate inverse-return-to-zero line coded downstream data signals at a plurality of wavelengths, and the optical link further comprises wavelength division multiplexing apparatus and wavelength division demultiplexing apparatus. The passive optical network system can therefore implement a wavelength division multiplexed passive optical network.

A plurality of the optical network units may arranged in one or more subsets, the optical network units in each subset being configured to receive downstream data signals of substantially the same wavelength, and the optical link further comprises a one-to-many optical power splitter provided between the optical line terminal and the or each subset. The passive optical network system can therefore implement a hybrid wavelength division multiplexed/time division multiple access passive optical network.

The optical link preferably comprises a feeder fibre between the wavelength division multiplexing apparatus and the wavelength division demultiplexing apparatus a long reach distribution fibre to each single optical network unit and a short reach distribution fibre from each one-to-many optical power splitter to the optical network units in its respective subset.

The optical network units may each be configured to receive downstream data signals of substantially the same wavelength and the optical link further comprises a one-to-many optical power splitter provided between the optical line terminal and the optical network units. The passive optical network system can therefore implement a time division multiple access passive optical network.

According to a second aspect of the invention there is provided an optical network unit comprising a downlink optical receiver configured to receive a first portion of an inverse-return-to-zero line coded downstream data signal. An uplink optical remodulator is configured to receive a second portion of the downstream data signal and remodulate it to generate a retum-to-zero line coded upstream data signal.

The uplink optical remodulator preferably comprises an electro-optical modulator configured to be driven by a return-to-zero encoded electronic data signal. The uplink optical remodulator is preferably configured to both remodulate and amplify said second portion of the downstream data signal to generate a return-to-zero line coded upstream data signal. The uplink optical remodulator preferably comprises a reflective semiconductor optical amplifier configured to be driven by a return-to-zero encoded electronic data signal.

The reflective semiconductor optical amplifier is preferably operable on receipt of a dark pulse having a pulse leading edge and a pulse tail to suppress the dark pulse tail to form a logical zero for the upstream data signal or to amplify the dark pulse tail to form a logical one, and is operable on receipt of a light pulse to suppress one-half of the pulse to form a logical one or to suppress the whole pulse to form a logical zero.

The reflective semiconductor optical amplifier therefore only remodulates continuous wave (CW) light signals.

The reflective semiconductor optical amplifier is preferably configured to operate outside of its saturation regime for input powers at the optical power level of the second portion of the downstream data signal. The second portion of the downstream data signal preferably has an optical power of not greater than P = G-P(max), where P is in dBm, G is the gain of the reflective semiconductor optical amplifier in dB and P(max) is the maximum optical output power of the reflective semiconductor optical amplifier in dBm.

The optical network unit preferably further comprises signal synchronisation apparatus configured to interleave the return-to-zero line coded upstream data signal by one-half bit with respect to the incoming inverse-return-to-zero line coded downstream data signal. The signal synchronisation apparatus preferably comprises an optical delay line provided between the optical link and the uplink optical remodulator.

This ensures that CW light is available at the reflective semi-conductor optical amplifier for remodulation.

According to a third aspect of the invention there is provided a passive optical network line coding method comprising generating an inverse-return-to-zero line coded downstream data signal. A portion of the downstream data signal is received and remodulated to generate a return-to-zero line coded upstream data signal.

The inverse-return-to-zero/return-to-zero line coding pair is transparent to the architecture of the passive optical network with which the method is used, thus providing a high degree of flexibility in design and deployment of next generation WDM-PONs.

The inverse-return-to-zero line coded downstream data signal preferably comprises dark pulses having a duty cycle of approximately fifty percent. The method can therefore be used to achieve symmetrical downstream and upstream data bandwidths.

The remodulation of the portion of the downstream data signal is preferably performed by delivering the portion of the downstream data signal to an electro-optical modulator and driving the electro-optical modulator with a return-to-zero encoded electronic data signal.

The line coding method preferably comprises both remodulating and amplifying the portion of the downstream data signal to generate a return-to-zero line coded upstream data signal.

The remodulation and amplification of the portion of the downstream data signal is preferably performed by delivering the portion of the downstream data signal to a reflective semiconductor optical amplifier and driving the reflective semiconductor optical amplifier with a return-to-zero encoded electronic data signal.

The remodulated upstream data signal is preferably generated by, on receipt of a dark pulse having a pulse leading edge and a pulse tail, the dark pulse tail being suppressed to form a logical zero for the upstream data signal or being amplified to form a logical one, and, on receipt of a light pulse, one-half of the pulse being suppressed to form a logical one or the whole pulse being suppressed to form a logical zero.

Therefore only continuous wave (CW) light signals are remodulated.

The reflective semiconductor optical amplifier is preferably operated outside of its saturation regime for input powers at the optical power level of the second portion of the downstream data signal. The optical power of the second portion of the downstream data signal is preferably set at not greater than P = G-P(max), where P is in dBm, G is the gain of the reflective semiconductor optical amplifier in dB and P(max) is the maximum optical output power of the reflective semiconductor optical amplifier in dBm.

Operation of the reflective semi-conductor optical amplifier outside of its saturation regime relaxes the power budget constraints on the passive optical network system.

The line coding method preferably further comprises interleaving the return-to-zero line coded upstream data signal by one-half bit with respect to the incoming inverse-return-to-zero line coded downstream data signal. Preferably, synchronisation of the downstream and upstream data signals for interleaving is performed by introducing an optical delay to the portion of the downstream data signal to be remodulated.

This ensures that CW light is available for remodulation.

Embodiments of the invention will now be described in detail, by way of example only, with reference to the accompanying drawings.

### Brief description of the drawings

Figure 1 is a schematic representation of a passive optical network system according to a first embodiment of the invention;
Figure 2 is a schematic representation of a passive optical network system according to a second embodiment of the invention;
Figure 3 is a schematic representation of a passive optical network system according to a third embodiment of the invention;
Figure 4 is a schematic representation of (a) an experimental set-up of a passive optical network according to the second embodiment of the invention, and (b) of the optical network unit receiver;
Figure 5 shows eye diagrams for downstream (DS) and upstream (US) signals of the PON of Figure 4: DS: (a) back-to-back; (b) after 80km SMF; (c) after 80km SMF and R-SOA unplugged; US back-to-back for three seed signal power levels: (d) -25dBm; (e) -30dBm; (f) -35dBm. The eye diagrams are recorded on a time scale of 100 ps/division with a 1.87GHz electrical post-detection filter;
Figure 6 shows bit error rate (BER) measurements for downstream and upstream data signals of the PON of Figure 4 for long reach (80km); white symbols refer to back-to-back conditions, and black symbols indicated BER after transmission across 80km SMF;
Figure 7 shows bit error rate (BER) measurements for downstream and upstream data signals of the PON of Figure 4 for short reach (26km); white symbols refer to back-to-back conditions, and black symbols indicated BER after transmission across 26km SMF; and
Figure 8 is a flow chart of a passive optical network line coding method according to a fourth embodiment of the invention.

### Detailed description

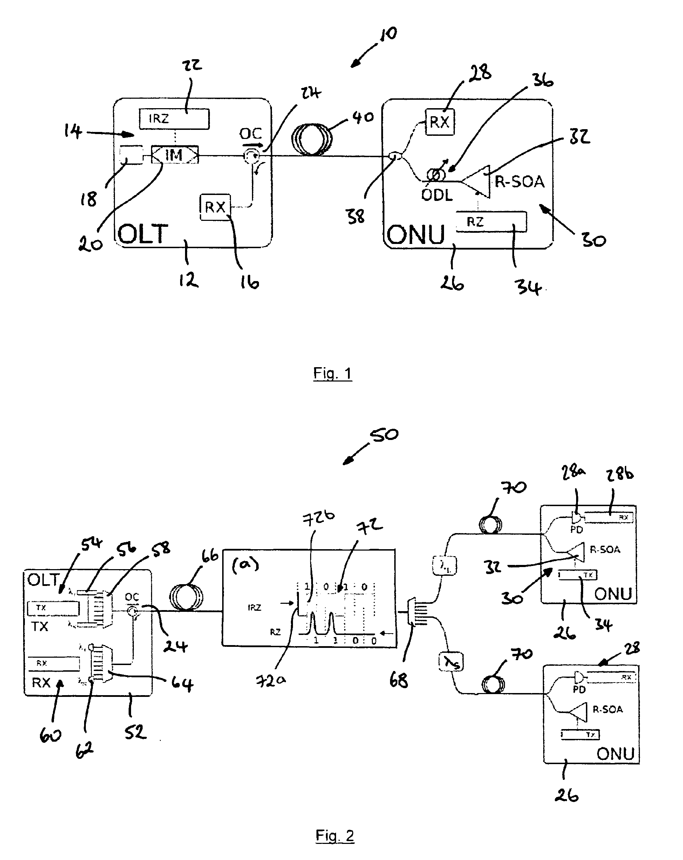

Referring to Figure 1, a first embodiment of the invention provides a short reach passive optical network (PON) system 10 comprising an optical line terminal (OLT) 12, an optical network unit (ONU) 26 and an optical link 40, in the form of 25km single mode fibre, coupled between the OLT 12 and the ONU 26 and configured to transmit downstream and upstream data signals between them. In this embodiment, the OLT 12 comprises a downlink optical transmitter 14 configured to generate an inverse-return-to-zero (IRZ) line coded downstream data signal, and an uplink optical receiver 16 configured to receive an upstream data signal.

IRZ line coding comprises a two-level signal which comprises a light pulse (a continuous wave (CW) pulse) to represent a logical 0 and no pulse, e.g. no light, or at least substantially less light than the CW light level, (also known as a "dark pulse") to represent a logical 1. The signal returns to zero (i.e. CW light) between pulses. The dark pulses have a 50% duty cycle, i.e. have a duration of one-half of a clock cycle. The dark pulses have a leading edge, being the transition from CW light to no light, and a trailing edge (the pulse "tail"), being the transition from no light to CW light, as shown in Figure 2(a) in relation to the second embodiment. The trailing edge, being a transition portion, will thus comprise some light.

The downlink optical transmitter 14 comprises an optical carrier signal source, in the form of a laser 18, operable to generate an optical carrier signal, an IRZ electronic data signal source 22 and an intensity modulator, which here takes the form of a Mach-Zehnder modulator 20. The IRZ data signal source 22 generates a 50% duty cycle IRZ data signal (50% IRZ) at 1.25 Gb/s. The 50% IRZ data signal drives the Mach-Zehnder modulator 20 to apply the IRZ data signal to the optical carrier signal, to generate a 1.25Gb/s 50% IRZ line coded downstream data signal.

The downstream data signal is coupled into the optical link 40 via an optical circulator (OC) 24. Upstream data signals are coupled from the optical link 40 to the uplink optical received 16 via the optical circulator 24.

The ONU 26 comprises a downlink optical receiver 28 configured to receive a first portion of a downstream data signal, and an uplink optical remodulator 30 configured to receive a second portion of the downstream data signal and to both remodulate and amplify it to generate a return-to-zero (RZ) line coded upstream data signal.

The ONU 26 further comprises a 3dB coupler 38 coupled on one side to the optical link 40 and on its other side to the downlink optical receiver 28 and to the remodulator 30. The 3db coupler 38 acts to split a received downstream data signal into two substantially equal power signals (a signal to be received by the downlink optical receiver 28 and an optical seed signal for the remodulator 30), and couples the signals to the downlink optical receiver 28 and the remodulator 30 respectively.

The ONU 26 further comprises a local clock signal source associated with the downstream receiver 28.

The uplink optical remodulator 30 comprises an electro-optic modulator in the form of a reflective semiconductor optical amplifier (R-SOA) 32, an RZ electronic data signal source 34 and signal synchronisation apparatus in the form of a variable optical delay line (ODL) 36.

The R-SOA 32 in this example comprises a commercially available device providing 21 dB of small signal gain at 50mA bias current, 2 dBm output saturation power, 1 dB polarization dependent gain and 8 db noise figure, and is biased at 70mA. The R-SOA 32 is operated outside of its saturation regime. The seed signal received at the R-SOA 32 has a power level of not greater than P = G-P(max), where P is in dBm, G is the gain of the R-SOA in dB, and P(max) is the maximum optical output power of the R-SOA in dBm. In this example, the seed signal has a power of between -15dBm and -35dBm. The RZ data signal source generates a 7V peak-to-peak 1.25Gb/s RZ data signal.

The optical delay line 36 acts to synchronize the upstream data signal (i.e. the RZ data signal) with the downstream data signal, in conjunction with the local clock source, so that the upstream data signal is interleaved by one-half bit with respect to the incoming downstream data signal. This means that the RZ data signal is applied (i.e. the R-SOA remodulates and amplifies) only when the seed signal comprises a CW signal, as follows.

When the downstream data signal, comprises a dark pulse (a logical 1), the seed signal comprises the dark pulse tail, which is suppressed by the R-SOA 32 to form a logical 0 for the upstream data signal or is amplified by the R-SOA 32 to form a logical 1. When the downstream data signal comprises a light pulse (a logical 0), the seed signal comprises a CW light pulse having a duration equal to the full clock cycle, one-half of the light pulse is suppressed by the R-SOA 32 to form a logical 1 or the whole pulse is suppressed by the R-SOA 32 to form a logical 0.

It will be appreciated that the optical link fibre 40 may be of a different length, and may in particular be a long reach fibre having a length of, for example, 80-100km, to form a long reach passive optical network system.

Referring to Figure 2, a second embodiment of the invention provides a wavelength division multiplexed (WDM) passive optical network (PON) system 50 which is an extension of the passive optical network system 10 of the first embodiment. The same reference numbers are retained for corresponding features.

In this WDM-PON embodiment, the OLT 52 comprises a downlink optical transmitter (Tx) array 54 configured to generate plurality of inverse-return-to-zero (IRZ) line coded downstream data signals, each at a different one of a plurality of optical carrier wavelengths, and an uplink optical receiver (Rx) array 60 configured to receive a plurality of upstream data signals at said carrier wavelengths.

The downlink Tx array 54 comprises a plurality of optical carrier signal sources in the form of lasers 56. The resulting plurality of IRZ line coded downstream data signals are multiplexed through an arrayed waveguide grating (AWG) 58 and coupled via the optical circulator (OC) 24 into a single mode feeder fibre 66, having a length of 20km, which forms the first part of the optical link.

The uplink Rx array 60 comprises a corresponding plurality of photodiodes 62. Upstream data signals are coupled to the photodiodes 62 from the feeder fibre 66 through the circulator 24 and a demultiplexed in a second AWG 64.

The WDM-PON 50 comprises a plurality of ONUs 26 (only two are shown for clarity). The optical link in this embodiment comprises the single mode feeder fibre 66, a plurality of distribution fibres 70 (only two, λ_{L}, λ_{S}, are shown for clarity) and a third AWG 68 coupled between the feeder fibre 66 and the distribution fibres 70. In this example, the distribution fibres are long reach distribution fibres each having a length of 60km. The third AWG 68 acts to demultiplex the plurality of downstream data signals and route each to their respective distribution fibre 70 and ONU 26, and acts to multiplex a plurality of upstream data signals received from the ONUs 26 into the feeder fibre 66 for transmission upstream to the OLT 52.

The downlink optical receivers comprise a photodiode 28a and a digital receiver 28b.

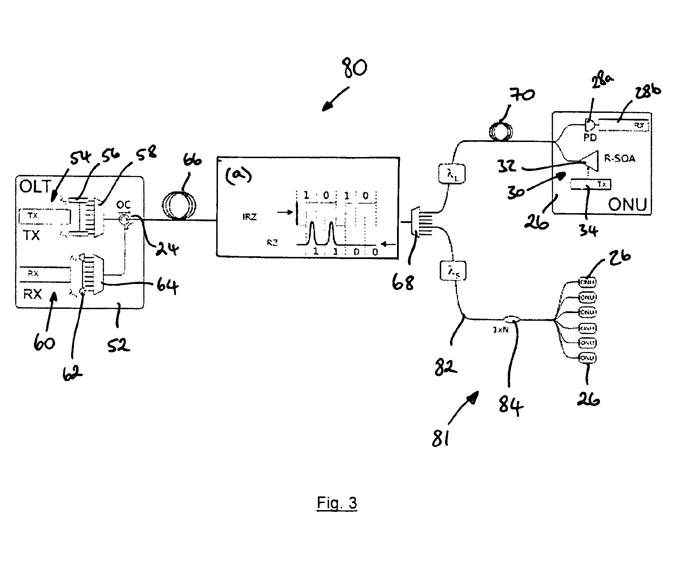

Referring to Figure 3, a third embodiment of the invention provides a hybrid WDM/Time Division Multiple Access (TDMA) PON 80, which is substantially the same as the WDM-PON 50 of the second embodiment, with the following modifications. The same reference numbers are retained for corresponding features.

In this embodiment, one or more of the carrier signal wavelengths is used for a short reach TDMA sub-network 81 from the third AWG 68 (only 1, λ_{S}, is shown for clarity). The TDMA sub-network 81 comprises a short reach distribution fibre 82, a 1xN (in this example 1x6) optical power splitter 84 and six ONUs 26.

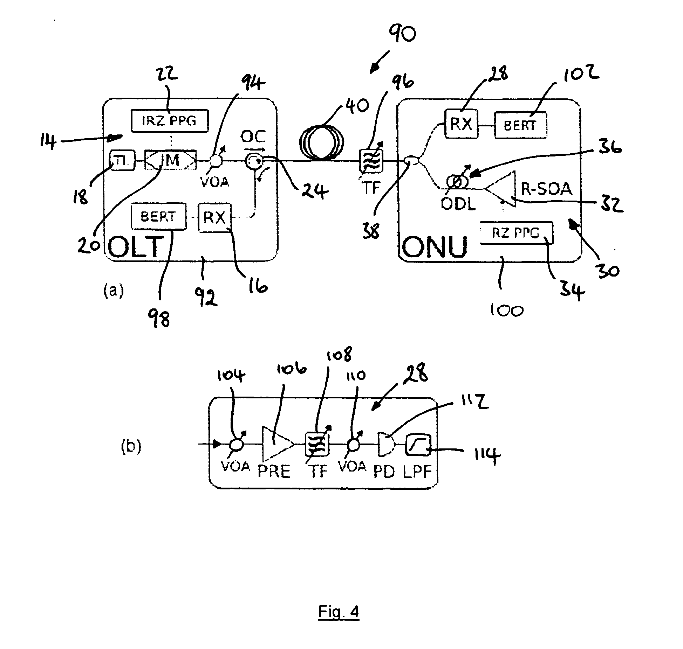

Figure 4(a) shows a schematic representation of an experimental set-up of a passive optical network 90 according to the second embodiment of the invention. The same reference numbers are retained for corresponding features.

The experimental set-up is tested using a single wavelength channel. It will be appreciated that the same results would be achieved for each of a plurality of wavelength channels in the WDM-PON 50 of Figure 2.

In this experimental test, the downstream IRZ data signal was obtained by modulating an external cavity laser 18 operating at 1542 nm with a Mach-Zender Intensity modulator 20; it was driven by an electrical pseudo-random bit sequence (PRBS), 2^7-1 bits long encoded in an IRZ pattern at 1.25 Gb/s generated by a pulse pattern generator 22. This length of data is compatible with 8B10B coding.

The downstream transmitter 14 further comprised a Variable Optical Attenuator (VOA) 94, used to set the optical power level received at the ONU 100. The VOA 94 was placed at the transmitter 14 in order to evaluate the impairments due to back-reflections (Rayleigh and Fresnel scattering) on both the downstream and upstream channels.

After passing through an optical circulator (OC) 24, having 1 dB insertion loss, the downstream signal was launched into a Single Mode Feeder Fiber (SMF) 40. In this experimental test, we consider two cases: a short reach 25 km feeder fibre 40 (having 6 dB total insertion loss); and a long reach 80 km feeder fibre 40 (having 20 dB total insertion loss), in order to assess the performance of the IRZ/RZ line coding pair both in the short and long reach cases.

The AWG 68 of Figure 2 was emulated by means of a 0.8 nm tunable optical filter (TF) 96, having 3 dB insertion loss. Although the experiment was conducted on a single wavelength, this filter was needed to reject amplified spontaneous emission (ASE) noise generated by the R-SOA when operated out of the saturation regime.

The ONU 100 comprised a 3 dB coupler 38, a receiver (Rx) 28 and an R-SOA 32. The R-SOA 32 was a commercially available device, providing 21 dB of small signal gain at 50mA bias current, 2 dBm output saturation power, 1 dB polarization dependent gain and 8 db noise figure. The R-SOA 32 was biased at 70mA and driven with a 7V peak-to-peak RZ encoded signal (a 2^7-1 long PRBS, at 1.25 Gb/s, as for the downstream data signal). An optical Delay Line (ODL) 36 was used to ensure proper synchronization between downstream and upstream data signals.

Referring to Figure 4(b), the ONU receiver 28 comprises a PIN diode detector 112, which was optically pre-amplified in order to overcome the low responsivity of the available PIN diode detector 112 and allow Bit Error ratio (BER) measurement with low received power levels. The optical preamplification was performed by a double stage Erbium Doped Fiber Amplifier (EDFA) (PRE) 106 providing 45 dB gain with a 5 dB noise figure. It was followed by a tunable optical filter (TF) 108 having 0.2 nm full-width half-maximum (FWHM) linewidth for ASE noise removal. The EDFA preamplifier 106 was fed with an out-of-band CW optical signal in order to keep it properly working.

A post-detection 4th-order Bessel low-pass filter (LPF) having a 1.87 GHz bandwidth was used to reject high frequency noise from the received signal. At the tested bit-rate (1.25 Gb/s), a narrower post-detection filter would be preferred, but was not available. BER measurements were conducted by keeping a constant optical power to the photodiode (-6 dBm). The receiver 28 enabled BER measurement to be made with single channel input optical power as low as -50 dBm. The same receiver was used as the uplink receiver 16 at the OLT 92 to characterize the upstream signal transmission performance. In a real environment, an avalanche photodiode (APD) would be preferred as the receiver, at least at the ONU side of the PON 90.

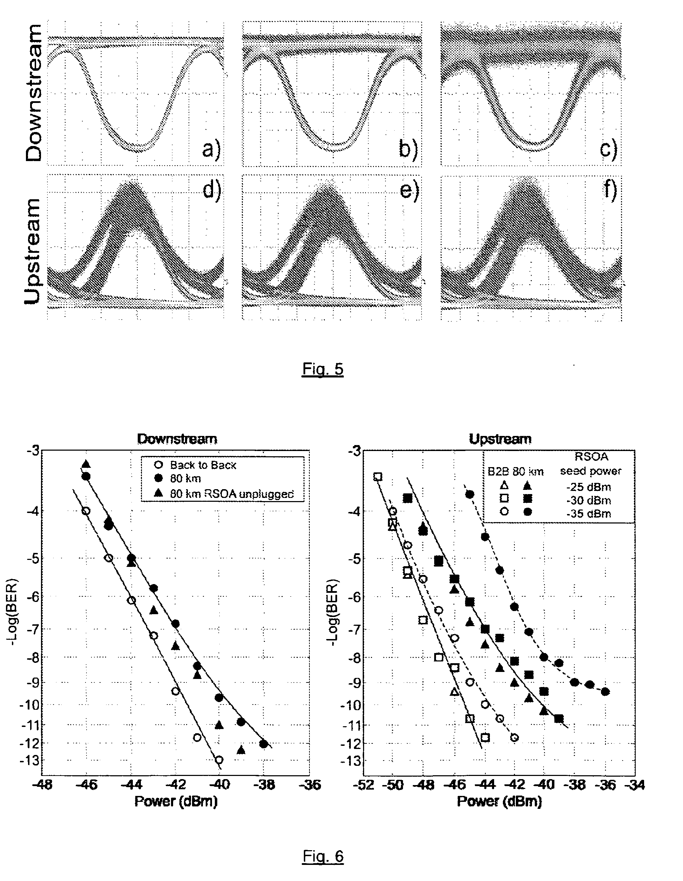

Figure 5 shows the eye diagrams of the downstream (DS) signal and the upstream (US) signal. The downstream eye-diagrams are shown back-to-back (a) and after transmission (b, c). As it can be seen, the eye diagram of the downstream signal is only slightly affected by propagation across the PON 90. When the upstream signal is applied (RSOA 32 turned on), the DS eye diagram shows an incremented noise on the "space" (dark pulse) level. This is due to Rayleigh backscattering generated by the upstream signal. The slight power penalty induced by this effect is detailed further below. The US eye diagrams shown were recorded at the RSOA output, and refer to three seed signal power levels: -25 dBm (d), -30 dBm (e) and - 35 dBm (f).

The upstream eye diagrams are affected by a patterning effect, due to the remodulation process; the remodulated, upstream pulses have slightly different shapes depending on whether the R-SOA 32 is remodulating the seed signal to a 0 or a 1. As it can be seen, this patterning is not dependent on the power of the seed signal. Although this patterning causes some power penalty, the observed eye-diagrams are still wide open and clear for all of the seed signal powers considered.

The results also show an increasing amount of noise as the seed signal power is decreased. This noise becomes significant for very low seed signal power levels and leads to a strong power penalty.

In the experimental test, data transmission was carried out at 1.25 Gb/s, which is close to the modulation bandwidth of the R-SOA 32. Bandwidth limitation is evident in the upstream eye-diagram. The upstream electrical signal used is 50% RZ, but after electrical to optical (E/O) conversion, the RZ signal shows a higher duty cycle, of around 66%. However, this does not introduce inter-symbol interference at the ONU transmitter, and it is not detrimental as it mitigates chromatic dispersion impairments experienced by the upstream signal. The PON performance was determined by BER measurements made using a bit error ratio test (BERT) test set 98, 102.

The BER measurements for the long reach, 80 km SMF feeder fibre 40, are shown in Figure 6. The downstream signal acquires about 1.5 dB of power penalty after the 80 km SMF transmission. This power penalty is due in part to Rayleigh scattering generated inside the feeder fibre 40 by the upstream signal; when the R-SOA 32 is disconnected, the downlink power penalty is reduced by about 0.5 dB. This additional power penalty is observed only when the R-SOA 32 is highly saturated (i.e. when it is fed with optical power exceeding -15 dBm) thus providing around 0 dBm of remodulated power. In operating regimes in which the R-SOA 32 is operated far from saturation, the upstream remodulated power does not affect the downstream sensitivity.

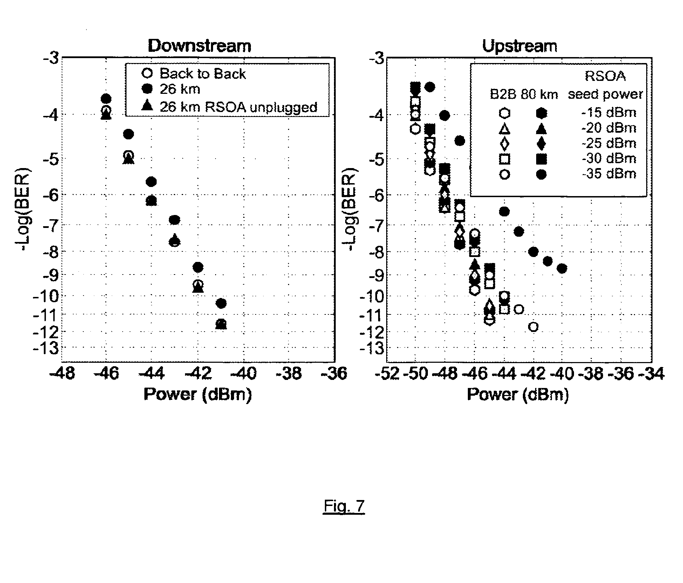

The upstream BER performance is shown in Figure 7. The transmission power penalty of the upstream signal is essentially determined by the power of the seed signal delivered to the R-SOA 32. Three seed power levels at which the R-SOA 32 operated outside its saturation regime were investigated: -25, -30, and -35 dBm. For seed signal power levels of -25dBm and -30dBm, similar performance is obtained; the upstream transmission power penalty is 4.5dB and 5.5 dB for -25 and -30 dBm seed signal power levels respectively. The power penalty for these two seed signal power levels is mostly due to Rayleigh back scattering, which limits the Optical Signal to Noise Ratio (OSNR) of the upstream signal at the OLT to 15 dB.

For seed signal power levels of less than -30 dBm, a marked change in performance of the PON 90 is observed. Under these conditions the R-SOA 32 modulation bandwidth is slightly decreased, and the remodulated signal shows a significant OSNR degradation at the output of the R-SOA 32. The lowest useful seed signal power level identified in this experimental test is -35 dBm. While the back-to- back sensitivity shows 1 dB power penalty in respect to the two higher seed signal power levels tested, after the transmission we observed about 7 dB power penalty and a BER floor. Under such condition, the upstream/remodulated signal has a non-negligible ASE content. While this does not practically affect the upstream back-to-back sensitivity, the effect of the chromatic dispersion over such ASE noise becomes significant following transmission across the 80 km SMF feeder fibre of the PON 90.

The performance of the PON 90 was also tested for a short reach environment, having a 26 km SMF feeder fibre 40, meaning that hybrid WDM/TDMA can be exploited. In this case, the extra power budget available at the R-SOA 32 may be used to increase the power splitting ratio of the coupler at the ONU, thus increasing the number of ONUs that can share the same wavelength.

Compared to the long reach example, the downstream channel performance is practically unchanged: however, we note the same 0.5 dB power penalty due to Rayleigh back-reflection generated by the upstream channel. The upstream channel also shows comparable performance to the long reach test example. Due to the short reach feeder fibre 40 having a lower insertion loss of around 6dB, it is possible to seed the R-SOA 32 with seed signals having higher power levels, of up to -15dBm. By operating the R-SOA 32 at its maximum gain, it is possible to obtain a higher signal to reflected power ratio for the upstream channel (measured to the OLT 92) as compared to the long reach example. In particular, the upstream OSNR was higher than 20dB, which is a 10dB improvement compared to the long reach example. The highest power penalty was observed for seed signal power levels lower than -30dB (similarly to the long reach example), when the OSNR degradation due to the R-SOA 32 becomes significant.

It is common in passive optical networks for the OLT 92 to be able to transmit optical signals having power levels of 1mW per channel (0 dBm/ch) and to have total link losses in the order of 12dB per channel (4dB at each AWG, plus 6dB for the feeder fibre 40). Operating the PON 90 at OdBm/ch, it is possible to have 18dB of loss in transmission across the PON 90 and be able to feed each ONU 26 with a seed signal having the minimum acceptable optical power level. This corresponds to a 1x64 power splitter, i.e. 64 ONUs 26 may be provided on a single PON 90.

In this experimental setup, a 3dB coupler is used at the ONU input. By using an uneven splitting ratio to deliver a higher proportion of the received downstream signal as the seed signal for the R-SOA 32 it would be possible to increase the power margin of the PON 90, thereby enabling an even higher number of ONUs 26 to be served across a single PON 90. In this case, the downstream receiver 28 would be replaced by an avalanche photodiode (APD) which has a sensitivity of around -40dBm at the bit-rate used.

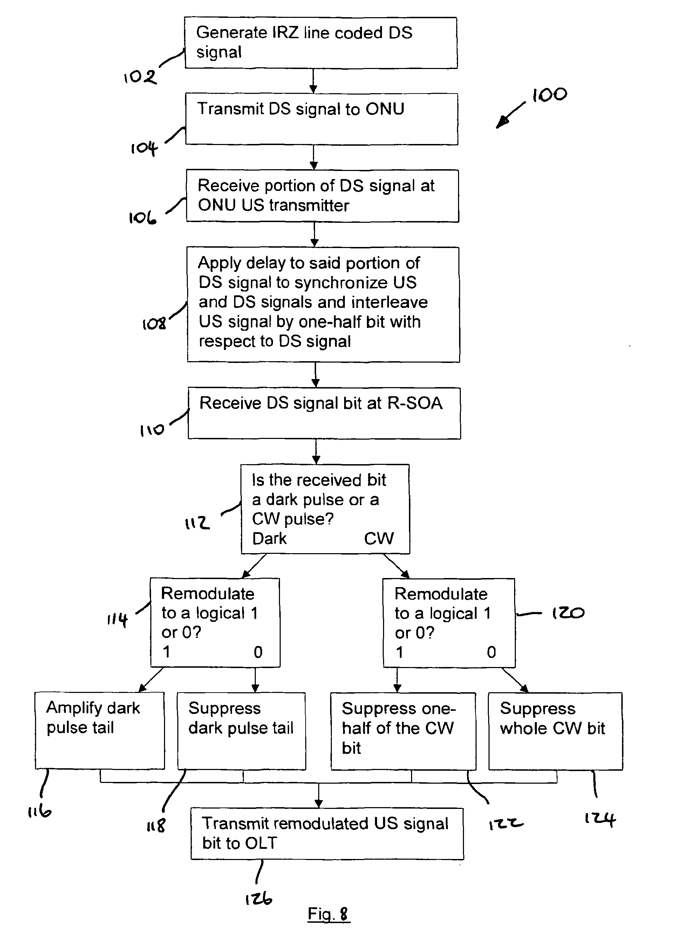

Referring to Figure 8, a fourth embodiment of the invention provides a passive optical network line coding method 100 which comprises generating an IRZ line coded downstream (DS) data signal 102, and receiving a portion of the DS signal 106 and remodulating it (114, 116, 118, 120, 122, 124) to generate a RZ line coded upstream (US) data signal. The method is suitable for use with any of the above described embodiments, and is described in relation to the PON architectures of the described embodiments.

In more detail, an IRZ line coded DS signal is generated 102, at the OLT of a passive optical network (PON) and is transmitted 104 across PON network link to an ONU. At the ONU the downstream signal is power split and one part is sent to the downlink receiver of the ONU, with the other part being sent, as a seed signal, to the upstream transmitter, which comprises an electro-optic modulator in the form of an R-SOA, of the ONU. The R-SOA is operated outside of its saturation regime.

A delay is applied 108 to the seed signal, using an optical delay line, in order to synchronize the US and DS signals and interleave 108 the US signal by one-half bit with respect to the DS signal. Synchronization is also assisted by reference to a local clock signal provided at the ONU, associated with the downlink receiver.

The seed signal is received at the R-SOA 110 and, for each bit in the downstream data signal, the bit is identified as a dark pulse or a light (CW) pulse 112. If the received bit is a dark pulse 114, the pulse is remodulated to form an upstream data bit as follows: the dark pulse tail is amplified 116 in order to generate a logical 1 for the upstream data signal or is suppressed 118 in order to generate a logical 0 for the upstream data signal. If the received bit is a light (CW) pulse 120, the pulse is remodulated to form an upstream data bit as follows: one half of the light pulse is suppressed122 to generate a logical 1 for the upstream data signal, or the whole pulse is suppressed 124 to generate a logical 0 for the upstream data signal. The remodulated US signal bit is then transmitted back across the network link to the OLT.

The described embodiments provide various advantages, as follows. The described passive optical network systems and method relax the constraints due to power losses in WDM PONs based on colourless reflective ONUs, such as those described comprising R-SOAs. Using the described systems and method it is possible to extend the range of operation of R-SOAs. The described systems provide long reach PON systems which do not require any in-line amplification. The described systems can be used to implement short reach PONs based on a hybrid WDM/TDMA approach, serving up to 64 ONUs, which doubles the capacity of the G-PON standard. The described PON systems enable both long reach and short reach/TDMA to be implemented for different wavelengths, opening the possibility to the realization of more flexible passive optical networks.

By using 50% IRZ coding for the downstream signal and RZ coding for the upstream signal it is possible not only to achieve symmetrical bandwidth, but also to operate the R-SOAs far from the saturation regime, thus relaxing the constraints on the ONU's received power. The described PONs offer error-free full downstream re-modulation by seeding the R-SOA with power levels as low as -35 dBm.

The described systems and method dramatically increase the WDM-PON power budget, thus allowing implementation of, for example, hybrid WDM/TDMA short reach PONs. If operated at 1.25 Gb/s this coding technique is quite tolerant to chromatic dispersion impairments. It thus allows implementation of long reach PONs without requiring in-line amplifiers, hence maintaining a totally passive PON. The described systems enable bidirectional transmission over 80 km feeder fiber without any other source of optical amplification. Moreover, the use of IRZ/RZ coding is completely transparent to the WDM-PON architecture: it can be implemented to allow for longer reaches or TDMA on selected wavelengths, thus providing an high degree of flexibility in design and deployment of next generation WDM-PONs.

In the described systems, the R-SOA used at the ONU as the remodualator is operated outside the saturation regime. This allows the power budget constraints on the PON to be relaxed. Another important advantage is that there is no lower limitation on the extinction ratio of the downstream signal, because the portion of the downstream signal that forms the seed signal for the R-SOA is always remodulated at times where there is CW light. Another advantage of the described systems is that the same architecture as standard WDM-PONs may be used; the optical "front-end" of the ONU (receiver and R-SOA) is identical to the one used in WDM-PON based on NRZ remodulation. Thus it is possible to use the described method and implement the described systems to upgrade the reach of already installed WDM-PONs.

## Claims

1. A passive optical network system (10, 50, 80, 90), comprising:
an optical line terminal (12, 52, 92), comprising: a downlink optical transmitter (14, 54) configured to generate an inverse-return-to-zero line coded downstream data signal; and an uplink optical receiver (16, 60) configured to receive an upstream data signal;
an optical network unit (26, 100) comprising: a downlink optical receiver (28) configured to receive a first portion of the downstream data signal; and an uplink optical remodulator (30) configured to receive a second portion of the downstream data signal and remodulate it to generate a return-to-zero line coded upstream data signal; and
an optical link (40, 66, 70, 82) coupled between the optical line terminal and the optical network unit and configured to transmit downstream and upstream data signals therebetween.

2. A passive optical network system as claimed in claim 1, wherein the inverse-return-to-zero line coded downstream data signal comprises dark pulses having a duty cycle of approximately fifty percent.

3. A passive optical network system as claimed in claims 1 or 2, wherein the uplink optical remodulator (30) comprises an electro-optical modulator (32) configured to be driven by a return-to-zero encoded electronic data signal (34).

4. A passive optical network system as claimed in any preceding claim, wherein the uplink optical remodulator (30) is configured to both remodulate and amplify said second portion of the downstream data signal to generate a return-to-zero line coded upstream data signal.

5. A passive optical network system as claimed in claim 4, wherein the uplink optical remodulator (30) comprises a reflective semiconductor optical amplifier (32) configured to be driven by a return-to-zero encoded electronic data signal (34).

6. A passive optical network system as claimed in claim 5, wherein the reflective semiconductor optical amplifier (32) is operable on receipt of a dark pulse (72) having a pulse leading edge (72a) and a pulse tail (72b) to suppress the dark pulse tail to form a logical zero for the upstream data signal or to amplify the dark pulse tail to form a logical one, and is operable on receipt of a light pulse to suppress one-half of the pulse to form a logical one or to suppress the whole pulse to form a logical zero.

7. A passive optical network system as claimed in claims 5 or 6, wherein the reflective semiconductor optical amplifier (32) is configured to operate outside of its saturation regime for input powers at the optical power level of the second portion of the downstream data signal.

8. A passive optical network system as claimed in any preceding claim, wherein the optical network unit (26, 100) further comprises signal synchronisation apparatus (36) configured to interleave the return-to-zero line coded upstream data signal by one-half bit with respect to the incoming inverse-return-to-zero line coded downstream data signal.

9. A passive optical network system as claimed in claim 8, wherein the signal synchronisation apparatus comprises an optical delay line (36) provided between the optical link (40, 70, 82) and the uplink optical remodulator (30).

10. A passive optical network system (50, 80) as claimed in any preceding claim, wherein the passive optical network system comprises a plurality of optical network units (26), the optical link (66, 70, 82) being coupled between the optical line terminal (60) and each of the optical network units.

11. An optical network unit (26, 100) comprising:
a downlink optical receiver (28) configured to receive a first portion of an inverse-return-to-zero line coded downstream data signal; and
an uplink optical remodulator (30) configured to receive a second portion of the downstream data signal and remodulate it to generate a return-to-zero line coded upstream data signal.

12. An optical network unit as claimed in claim 11, wherein the uplink optical remodulator (30) comprises an electro-optical modulator (32) configured to be driven by a return-to-zero encoded electronic data signal (34).

13. An optical network unit as claimed in claims 11 or 12, wherein the uplink optical remodulator (30) is configured to both remodulate and amplify said second portion of the downstream data signal to generate a return-to-zero line coded upstream data signal.

14. An optical network unit as claimed in claim 13, wherein the uplink optical remodulator (30) comprises a reflective semiconductor optical amplifier (32) configured to be driven by a return-to-zero encoded electronic data signal (34).

15. An optical network unit as claimed in claim 14, wherein the reflective semiconductor optical amplifier (32) is operable on receipt of a dark pulse (72) having a pulse leading edge (72a) and a pulse tail (72b) to suppress the dark pulse tail to form a logical zero for the upstream data signal or to amplify the dark pulse tail to form a logical one, and is operable on receipt of a light pulse to suppress one-half of the pulse to form a logical one or to suppress the whole pulse to form a logical zero.

16. An optical network unit as claimed in claims 14 or 15, wherein the reflective semiconductor optical amplifier (32) is configured to operate outside of its saturation regime for input powers at the optical power level of the second portion of the downstream data signal.

17. An optical network unit as claimed in any of claims 11 to 16, wherein the optical network unit (26) further comprises signal synchronisation apparatus (36) configured to interleave the return-to-zero line coded upstream data signal by one-half bit with respect to the incoming inverse-return-to-zero line coded downstream data signal.

18. An optical network unit as claimed in claim 17, wherein the signal synchronisation apparatus comprises an optical delay line (36) provided between the optical link (40) and the uplink optical remodulator (30).

19. A passive optical network line coding method (100) comprising:
generating an inverse-return-to-zero line coded downstream data signa (102)|; and
receiving a portion of the downstream data signal (110) and remodulating it (114, 116, 118, 120, 122, 124) to generate a return-to-zero line coded upstream data signal.

20. A passive optical network line coding method as claimed in claim 19 wherein, the inverse-return-to-zero line coded downstream data signal comprises dark pulses having a duty cycle of approximately fifty percent.

21. A passive optical network line coding method as claimed in claims 19 or 20 wherein, the remodulation (114, 116, 118, 120, 122, 124) of the portion of the downstream data signal is performed by delivering the portion of the downstream data signal to an electro-optical modulator (32) and driving the electro-optical modulator with a return-to-zero encoded electronic data signal (34).

22. A passive optical network line coding method as claimed in any of claims 19 to 21 wherein, the line coding method comprises remodulating and amplifying (114, 116, 118, 120, 122, 124) the portion of the downstream data signal to generate a return-to-zero line coded upstream data signal.

23. A passive optical network line coding method as claimed in claim 22 wherein, the remodulation and amplification of the portion of the downstream data signal is performed by delivering the portion of the downstream data signal to a reflective semiconductor optical amplifier (110) and driving the reflective semiconductor optical amplifier with a return-to-zero encoded electronic data signal (114, 116, 118, 120, 122, 124).

24. A passive optical network line coding method as claimed in any of claims 19 to 23 wherein, the remodulated upstream data signal (126) is generated by, on receipt of a dark pulse (72, 112, 114) having a pulse leading edge (72a) and a pulse tail (72b), the dark pulse tail being suppressed to form a logical zero (118) for the upstream data signal or being amplified (116) to form a logical one, and, on receipt of a light pulse (112, 120), one-half of the pulse being suppressed to form a logical one (122) or the whole pulse being suppressed to form a logical zero (124).

25. A passive optical network line coding method as claimed in any of claims 19 to 24 wherein, the line coding method further comprises interleaving the return-to-zero line coded upstream data signal by one-half bit with respect to the incoming inverse-return-to-zero line coded downstream data signal (108).

26. A passive optical network line coding method as claimed in claim 25 wherein, synchronisation of the downstream and upstream data signals for interleaving is performed by introducing an optical delay to the portion of the downstream data signal to be remodulated (108).

## Patentansprüche

1. Passives optisches Netzsystem (10, 50, 80, 90), umfassend:
ein optisches Leitungsendgerät (12, 52, 92), umfassend: einen optischen Abwärtssender (14, 54), der so konfiguriert ist, dass er ein Inverse-Rückkehr-nach-Null-leitungscodiertes Abwärtsdatensignal erzeugt; und einen optischen Aufwärtsempfänger (16, 60), der so konfiguriert ist, dass er ein Aufwärtsdatensignal empfängt;
eine optische Netzeinheit (26, 100), umfassend: einen optischen Abwärtsempfänger (28), der so konfiguriert ist, dass er einen ersten Abschnitt des Abwärtsdatensignals empfängt; und einen optischen Aufwärtsremodulator (30), der so konfiguriert ist, dass er einen zweiten Abschnitt des Abwärtsdatensignals empfängt und es remoduliert, um ein Rückkehr-nach-Null-leitungscodiertes Aufwärtsdatensignal zu erzeugen; und
eine optische Strecke (40, 66, 70, 82), die zwischen das optische Leitungsendgerät und die optische Netzeinheit gekoppelt und so konfiguriert ist, dass sie Abwärts- und Aufwärtsdatensignale dazwischen überträgt.

2. Passives optisches Netzsystem nach Anspruch 1, wobei das Inverse-Rückkehr-nach-Null-leitungscodierte Abwärtsdatensignal dunkle Impulse mit einem Tastverhältnis von ungefähr fünfzig Prozent umfasst.

3. Passives optisches Netzsystem nach Anspruch 1 oder 2, wobei der optische Aufwärtsremodulator (30) einen elektrooptischen Modulator (32) umfasst, der so konfiguriert ist, dass er durch ein Rückkehr-nach-Null-codiertes, elektronisches Datensignal (34) angesteuert wird.

4. Passives optisches Netzsystem nach einem der vorhergehenden Ansprüche, wobei der optische Aufwärtsremodulator (30) so konfiguriert ist, dass er den zweiten Abschnitt des Abwärtsdatensignals sowohl remoduliert als auch verstärkt, um ein Rückkehr-nach-Null-leitungscodiertes Aufwärtsdatensignal zu erzeugen.

5. Passives optisches Netzsystem nach Anspruch 4, wobei der optische Aufwärtsremodulator (30) einen reflektiven optischen Halbleiterverstärker (32) umfasst, der so konfiguriert ist, dass er durch ein Rückkehr-nach-Null-codiertes, elektronisches Datensignal (34) angesteuert wird.

6. Passives optisches Netzsystem nach Anspruch 5, wobei der reflektive optische Halbleiterverstärker (32) bei Empfang eines dunklen Impulses (72) mit einer vorderen Impulsflanke (72a) und einer hinteren Impulsflanke (72b) so betrieben werden kann, dass er die hintere Flanke des dunklen Impulses unterdrückt, um eine logische Null für das Aufwärtsdatensignal zu bilden, oder die hintere Flanke des dunklen Impulses verstärkt, um eine logische Eins zu bilden, und bei Empfang eines hellen Impulses so betrieben werden kann, dass er eine Hälfte des Impulses unterdrückt, um eine logische Eins zu bilden, oder den ganzen Impuls unterdrückt, um eine logische Null zu bilden.

7. Passives optisches Netzsystem nach Anspruch 5 oder 6, wobei der reflektive optische Halbleiterverstärker (32) so konfiguriert ist, dass er außerhalb seines Sättigungsbetriebszustands für Eingangsleistungen auf dem Lichtleistungspegel des zweiten Abschnitts des Abwärtsdatensignals arbeitet.

8. Passives optisches Netzsystem nach einem der vorhergehenden Ansprüche, wobei die optische Netzeinheit (26, 100) ferner eine Signalsynchronisationsvorrichtung (36) umfasst, die so konfiguriert ist, dass sie das Rückkehr-nach-Null-leitungscodierte Aufwärtsdatensignal in Bezug auf das eingehende Inverse-Rückkehr-nach-Null-leitungscodierte Abwärtsdatensignal um ein halbes Bit überlappt.

9. Passives optisches Netzsystem nach Anspruch 8, wobei die Signalsynchronisationsvorrichtung eine optische Verzögerungsleitung (36) umfasst, die zwischen der optischen Strecke (40, 70, 82) und dem optischen Aufwärtsremodulator (30) vorgesehen ist.

10. Passives optisches Netzsystem (50, 80) nach einem der vorhergehenden Ansprüche, wobei das passive optische Netzsystem eine Mehrzahl von optischen Netzeinheiten (26) umfasst, und die optische Strecke (66, 70, 82) zwischen das optische Leitungsendgerät (60) und jede der optischen Netzeinheiten gekoppelt ist.

11. Optische Netzeinheit (26, 100), umfassend:
einen optischen Abwärtsempfänger (28), der so konfiguriert ist, dass er einen ersten Abschnitt eines Inverse-Rückkehr-nach-Null-leitungscodierten Abwärtsdatensignals empfängt; und
einen optischen Aufwärtsremodulator (30), der so konfiguriert ist, dass er einen zweiten Abschnitt des Abwärtsdatensignals empfängt und es remoduliert, um ein Rückkehr-nach-Null-leitungscodiertes Aufwärtsdatensignal zu erzeugen.

12. Optische Netzeinheit nach Anspruch 11, wobei der optische Aufwärtsremodulator (30) einen elektrooptischen Modulator (32) umfasst, der so konfiguriert ist, dass er durch ein Rückkehr-nach-Null-codiertes, elektronisches Datensignal (34) angesteuert wird.

13. Optische Netzeinheit nach Anspruch 11 oder 12, wobei der optische Aufwärtsremodulator (30) so konfiguriert ist, dass er den zweiten Abschnitt des Abwärtsdatensignals sowohl remoduliert als auch verstärkt, um ein Rückkehr-nach-Null-leitungscodiertes Aufwärtsdatensignal zu erzeugen.

14. Optische Netzeinheit nach Anspruch 13, wobei der optische Aufwärtsremodulator (30) einen reflektiven optischen Halbleiterverstärker (32) umfasst, der so konfiguriert ist, dass er durch ein Rückkehr-nach-Null-codiertes, elektronisches Datensignal (34) angesteuert wird.

15. Optische Netzeinheit nach Anspruch 14, wobei der reflektive optische Halbleiterverstärker (32) bei Empfang eines dunklen Impulses (72) mit einer vorderen Impulsflanke (72a) und einer hinteren Impulsflanke (72b) so betrieben werden kann, dass er die hintere Flanke des dunklen Impulses unterdrückt, um eine logische Null für das Aufwärtsdatensignal zu bilden, oder die hintere Flanke des dunklen Impulses verstärkt, um eine logische Eins zu bilden, und bei Empfang eines hellen Impulses so betrieben werden kann, dass er eine Hälfte des Impulses unterdrückt, um eine logische Eins zu bilden, oder den ganzen Impuls unterdrückt, um eine logische Null zu bilden.

16. Optische Netzeinheit nach Anspruch 14 oder 15, wobei der reflektive optische Halbleiterverstärker (32) so konfiguriert ist, dass er außerhalb seines Sättigungsbetriebszustands für Eingangsleistungen auf dem Lichtleistungspegel des zweiten Abschnitts des Abwärtsdatensignals arbeitet.

17. Optische Netzeinheit nach einem der Ansprüche 11 bis 16, wobei die optische Netzeinheit (26) ferner eine Signalsynchronisationsvorrichtung (36) umfasst, die so konfiguriert ist, dass sie das Rückkehr-nach-Null-leitungscodierte Aufwärtsdatensignal in Bezug auf das eingehende Inverse-Rückkehr-nach-Null-leitungscodierte Abwärtsdatensignal um ein halbes Bit überlappt.

18. Optische Netzeinheit nach Anspruch 17, wobei die Signalsynchronisationsvorrichtung eine optische Verzögerungsleitung (36) umfasst, die zwischen der optischen Strecke (40) und dem optischen Aufwärtsremodulator (30) vorgesehen ist.

19. Leitungscodierungsverfahren (100) für ein passives optisches Netz, umfassend:
Erzeugen eines Inverse-Rückkehr-nach-Null-leitungscodierten Abwärtsdatensignals (102); und
Empfangen eines Abschnitts des Abwärtsdatensignals (110) und Remodulieren desselben (114, 116, 118, 120, 122, 124), um ein Rückkehr-nach-Null-leitungscodiertes Aufwärtsdatensignal zu erzeugen.

20. Leitungscodierungsverfahren für ein passives optisches Netz nach Anspruch 19, wobei das Inverse-Rückkehr-nach-Null-leitungscodierte Abwärtsdatensignal dunkle Impulse mit einem Tastverhältnis von ungefähr fünfzig Prozent umfasst.

21. Leitungscodierungsverfahren für ein passives optisches Netz nach Anspruch 19 oder 20, wobei die Remodulation (114, 116, 118, 120, 122, 124) des Abschnitts des Abwärtsdatensignals durch Liefern des Abschnitts des Abwärtsdatensignals an einen elektrooptischen Modulator (32) und Ansteuern des elektrooptischen Modulators mit einem Rückkehr-nach-Null-codierten, elektronischen Datensignal (34) erfolgt.

22. Leitungscodierungsverfahren für ein passives optisches Netz nach einem der Ansprüche 19 bis 21, wobei das Leitungscodierungsverfahren ein Remodulieren und Verstärken (114, 116, 118, 120, 122, 124) des Abschnitts des Abwärtsdatensignals umfasst, um ein Rückkehr-nach-Null-leitungscodiertes Aufwärtsdatensignal zu erzeugen.

23. Leitungscodierungsverfahren für ein passives optisches Netz nach Anspruch 22, wobei die Remodulation und Verstärkung des Abschnitts des Abwärtsdatensignals durch Liefern des Abschnitts des Abwärtsdatensignals an einen reflektiven optischen Halbleiterverstärker (110) und Ansteuern des reflektiven optischen Halbleiterverstärkers mit einem Rückkehr-nach-Null-codierten, elektronischen Datensignal (114, 116, 118, 120, 122, 124) erfolgt.

24. Leitungscodierungsverfahren für ein passives optisches Netz nach einem der Ansprüche 19 bis 23, wobei das remodulierte Aufwärtsdatensignal (126) dadurch erzeugt wird, dass bei Empfang eines dunklen Impulses (72, 112, 114) mit einer vorderen Impulsflanke (72a) und einer hinteren Impulsflanke (72b) die hintere Flanke des dunklen Impulses unterdrückt wird, um eine logische Null für das Aufwärtsdatensignal zu bilden (118), oder verstärkt wird (116), um eine logische Eins zu bilden, und bei Empfang eines hellen Impulses (112, 120) eine Hälfte des Impulses unterdrückt wird, um eine logische Eins zu bilden (122), oder der ganze Impuls unterdrückt wird, um eine logische Null zu bilden (124).

25. Leitungscodierungsverfahren für ein passives optisches Netz nach einem der Ansprüche 19 bis 24, wobei das Leitungscodierungsverfahren ein Überlappen des Rückkehr-nach-Null-leitungscodierte Aufwärtsdatensignals in Bezug auf das eingehende Inverse-Rückkehr-nach-Null-leitungscodierte Abwärtsdatensignal um ein halbes Bit umfasst.

26. Leitungscodierungsverfahren für ein passives optisches Netz nach Anspruch 25, wobei die Synchronisation der Abwärts- und Aufwärtsdatensignale zum Überlappen durch Einführen einer optischen Verzögerung in den Abschnitt des zu remodulierenden Abwärtsdatensignals erfolgt (108).

## Revendications

1. Système de réseau optique passif (10,50,80,90) comprenant :
un terminal de ligne optique (12,52,92) comprenant : un émetteur optique en liaison descendante (14,54) configuré pour générer un signal de données d'aval codé en ligne de retour à zéro inverse ; et un récepteur optique en liaison montante (16,60) configuré pour recevoir un signal de données d'amont ;
une unité de réseau optique (26,100) comprenant : un récepteur optique en liaison descendante (28) configuré pour recevoir une première portion du signal de données d'aval ; et un remodulateur optique en liaison montante (30) configuré pour recevoir une seconde portion du signal de données d'amont et la remoduler pour générer un signal de données d'amont codé en en ligne de retour à zéro ; et
une liaison optique (40,66,70,82) couplée entre le terminal de ligne optique et l'unité de réseau optique et configurée pour émettre des signaux de données d'aval et d'amont entre ceux-ci.

2. Système de réseau optique passif selon la revendication 1, dans lequel le signal de données d'aval codé en ligne de retour à zéro inverse comprend des impulsions sombres ayant un cycle de service d'approximativement cinquante pour cent.

3. Système de réseau optique passif selon les revendications 1 ou 2, dans lequel le remodulateur optique en liaison montante (30) comprend un modulateur électro-optique (32) configuré pour être entraîné par un signal de données électronique codé en retour à zéro (34).

4. Système de réseau optique passif selon une quelconque des revendications précédentes, dans lequel le remodulateur optique en liaison montante (30)est configuré pour à la fois remoduler et amplifier ladite seconde portion du signal de données d'aval pour générer un signal de données d'amont codé en ligne de retour à zéro.

5. Système de réseau optique passif selon la revendication 4, dans lequel le remodulateur optique en liaison montante (30) comprend un amplificateur optique à semi-conducteurs réflectif (32) configuré pour être entraîné par un signal de données électronique codé en retour à zéro (34).

6. Système de réseau optique passif selon la revendication 4, dans lequel l'amplificateur optique à semi-conducteurs réflectif (32) est opérationnel à la réception d'une impulsion sombre (72) ayant un front avant d'impulsion (72a) et une queue d'impulsion (72b) pour supprimer la queue d'impulsion sombre afin de former un zéro logique pour le signal de données d'amont ou pour amplifier la queue d'impulsion sombre afin de former un un logique, et est opérationnel à la réception d'une impulsion lumineuse pour supprimer une moitié de l'impulsion afin de former un un logique ou pour supprimer l'impulsion totale afin de former un zéro logique.

7. Système de réseau optique passif selon les revendications 5 ou 6, dans lequel l'amplificateur optique à semi-conducteurs réflectif (32) est configuré pour fonctionner en dehors de son régime de saturation pour des puissances d'entrée au niveau de puissance optique des secondes portions du signal de données d'aval.

8. Système de réseau optique passif selon une quelconque des revendications précédentes, dans lequel l'unité de réseau optique (26,100) comprend en outre un appareil de synchronisation de signal (3) configuré pour entrelacer le signal de données d'amont codé en ligne de retour à zéro par un demi bit par rapport au signal de données d'aval codé en ligne de retour à zéro inverse entrant.

9. Système de réseau optique passif selon la revendication 8, dans lequel l'appareil de synchronisation de signal comprend une ligne de retard optique (36) prévue entre la liaison optique (40,70,82) et le remodulateur optique en liaison montante (30).

10. Système de réseau optique passif (50,80) selon une quelconque des revendications précédentes, dans lequel le système de réseau optique passif comprend une pluralité d'unités de réseau optique (26), la liaison optique (66,70,82) étant couplée entre le terminal de ligne optique (60) et chacune des unités de réseau optique.

11. Unité de réseau optique (26,100) comprenant :
un récepteur optique en liaison descendante (28) configuré pour recevoir une première portion d'un signal de données d'aval codé en ligne de retour à zéro inverse ; et
un remodulateur optique en liaison montante (30) configuré pour recevoir une seconde portion du signal de données d'aval et le remoduler pou générer un signal de données d'amont codé en ligne de retour à zéro.

12. Unité de réseau optique selon la revendication 11, dans laquelle le remodulateur optique en liaison montante (30) comprend un modulateur électro-optique (32) configuré pour être entraîné par un signal de données électronique codé en retour à zéro (34).

13. Unité de réseau optique selon les revendications 11 ou 12, dans laquelle le remodulateur optique en liaison montante (30) est configuré pour à la fois remoduler et amplifier ladite seconde portion du signal de données d'aval pour générer un signal de données d'amont codé en ligne de retour à zéro.

14. Unité de réseau optique selon la revendication 13, dans laquelle le remodulateur optique en liaison montante (30) comprend un amplificateur optique à semi-conducteurs réflectif (32) configuré pour être entraîné par un signal de données électronique codé en retour à zéro (34).

15. Unité de réseau optique selon la revendication 14, dans laquelle l'amplificateur optique à semi-conducteurs réflectif (32) est opérationnel à la réception d'une impulsion sombre (72) ayant un front avant d'impulsion (72a) et une queue d'impulsion (72b) pour supprimer la queue d'impulsion sombre afin de former un zéro logique pour le signal de données d'amont et pour amplifier la queue d'impulsion sombre afin de former un un logique, et est opérationnel à la réception d'une impulsion lumineuse pour supprimer une moitié de l'impulsion afin de former un un logique ou pour supprimer l'impulsion totale afin de former un zéro logique.

16. Unité de réseau optique selon les revendications 14 ou 15, dans laquelle l'amplificateur optique à semi-conducteurs réflectif (32) est configuré pour fonctionner en dehors de son régime de saturation pour des puissances d'entrée au niveau de puissance optique de la seconde portion du signal de données d'aval.

17. Unité de réseau optique selon une quelconque des revendications 11 à 16, dans laquelle l'unité de réseau optique (26) comprend en outre un appareil de synchronisation de signal (36) configuré pour entrelacer le signal de données d'amont codé en ligne de retour à zéro par un demi bit par rapport au signal de données d'aval codé en ligne de retour à zéro inverse entrant.

18. Unité de réseau optique selon la revendication 17, dans laquelle l'appareil de synchronisation de signal comprend une ligne de retard optique (36) prévue entre la liaison optique (40) et le remodulateur optique en liaison montante (30).

19. Procédé de codage en ligne de réseau optique passif (100) comprenant de :
générer un signal de données d'aval (102) codé en ligne de retour à zéro inverse ; et
recevoir une portion du signal de données d'aval (110) et la remoduler (114,116,118,120,122,124) pour générer un signal de données d'amont codé en ligne de retour à zéro.

20. Procédé de codage en ligne de réseau optique passif selon la revendication 19, dans lequel le signal de données d'aval codé en ligne de retour à zéro inverse comprend des impulsions sombres ayant un cycle de service d'approximativement cinquante pour cent.

21. Procédé de codage en ligne de réseau optique passif selon les revendications 19 ou 20, dans lequel la remodulation (114,116,118,120,122,124) de la portion du signal de données d'aval est effectuée en délivrant la portion du signal de données d'aval à un modulateur électro-optique (32) et en entraînant le modulateur électro-optique avec un signal de données électronique codé en retour à zéro (34).

22. Procédé de codage en ligne de réseau optique passif selon une quelconque des revendications 19 à 21, dans lequel, le procédé de codage en ligne comprend de remoduler et amplifier (114,116,118,120,122,124) la portion du signal de données d'aval pour générer un signal de données d'amont codé en ligne de retour à zéro.

23. Procédé de codage en ligne de réseau optique passif selon la revendication 22, dans lequel la remodulation et l'amplification de la portion du signal de données d'aval est effectuée en délivrant la portion du signal de données d'aval à un amplificateur optique à semi-conducteurs réflectif (110) et en entraînant l'amplificateur optique à semi-conducteurs réflectif avec un signal de données électronique codé en retour à zéro (114,116,118,120,122,124).

24. Procédé de codage en ligne de réseau optique passif selon une quelconque des revendications 19 à 23, dans lequel le signal de données d'amont remodulé (126) est généré en ce que, à la réception d'une impulsion sombre (72,112,114) ayant un front avant d'impulsion (72a) et une queue d'impulsion (72b), la queue d'impulsion sombre est supprimée pour former un zéro logique (118) pour le signal de données d'amont ou est amplifié (116) pour former un un logique et, à la réception d'une impulsion lumineuse (112,120), une moitié de l'impulsion est supprimée pour former un un logique (122) ou la totalité de l'impulsion est supprimée pour former un zéro logique (124).

25. Procédé de codage en ligne de réseau optique passif selon une quelconque des revendications 19 à 24, dans lequel le procédé de codage en ligne comprend en outre d'entrelacer le signal de données d'amont codé en ligne de retour à zéro par un demi bit par rapport au signal de données d'aval codé en ligne de retour à zéro inverse entrant (108).

26. Procédé de codage en ligne de réseau optique passif selon la revendication 25, dans lequel la synchronisation des signaux de données d'amont et d'aval à des fins d'entrelacement est effectuée en introduisant un retard optique sur la portion du signal de données d'aval à remoduler (108).
